Europäisches Patentamt

European Patent Office

Office européen des brevets

(11) Veröffentlichungsnummer: **0 525 481 B1**

(12) **EUROPÄISCHE PATENTSCHRIFT**

(45) Veröffentlichungstag der Patentschrift: **28.12.94**

(21) Anmeldenummer: **92111807.1**

(22) Anmeldetag: **10.07.92**

(51) Int. Cl.⁵: **F16L 3/14**, F16L 55/033

(54) **Halteeinrichtung für Rohrleitungen, insbesondere für solche in Kraftwerken.**

(30) Priorität: **15.07.91 DE 4123390**

(43) Veröffentlichungstag der Anmeldung:
**03.02.93 Patentblatt 93/05**

(45) Bekanntmachung des Hinweises auf die
Patenterteilung:
**28.12.94 Patentblatt 94/52**

(84) Benannte Vertragsstaaten:
**BE CH DE ES FR LI NL**

(56) Entgegenhaltungen:
**EP-A- 0 342 400**
**WO-A-89/01107**
**DE-A- 2 516 092**
**GB-A- 2 127 126**
**US-A- 4 413 799**

**PATENT ABSTRACTS OF JAPAN vol. 15, no.**
**093 (M-1089) 6. März 1991 (HITACHI LTD) 25.**
**Dezember 1990**

(73) Patentinhaber: **SIEMENS AKTIENGESELL-**
**SCHAFT**
**Wittelsbacherplatz 2**
**D-80333 München (DE)**

(72) Erfinder: **Lockau, Jürgen, Dr.**
**Genglerstrasse 5**
**W-8520 Erlangen (DE)**
Erfinder: **Hofmockel, Albrecht, Dipl.-Ing. (FH)**
**Eichenring 56**
**W-8551 Röttenbach (DE)**

## Beschreibung

Die Erfindung betrifft eine Halteeinrichtung für ein Rohr, insbesondere für ein Rohr einer Rohrleitung in einem Kraftwerk, mit einer Gelenkstrebe, die mit einem Ende an einen mit einer Gebäudestruktur Zu verbindenden Anker und mit ihrem anderen Ende an eine das Rohr kraft- und reibschlüssig Zu umgreifenden Rohrschelle angelenkt ist, wobei die Rohrschelle mindestens eine Schellenschlaufe und ein Schellenjoch mit einem Rohrleitungsbett aufweist.

Eine solche Halteeinrichtung ist in verschiedenen Ausführungsformen mit einer oder mehreren Gelenkstreben pro Rohrschelle bekannt (siehe z.B. die Zeitschrift "Power" vom September 1976, Seiten 100 bis 104, insbesondere die Abbildung auf Seite 100. Die hier abgedruckte Arbeit trägt den Titel "Shock restraint for nuclear fluid lines is fast-developing area of piping support", Verfasser: Harold Erikson). Zu den eingangs zitierten Halteeinrichtungen zählen auch sogenannte Bügelschellen.

Von solchen Halteeinrichtungen werden über die Gelenkstrebe nicht nur Zugkräfte, sondern auch Druckkräfte vom gehalterten Rohr auf das Gebäude übertragen bzw. abgeleitet. Wenn die Rohrschelle keinen ausreichenden Formschluß zur Rohrwand hat, müssen Querkräfte aus Winkelabweichungen der Gelenkstrebenachse relativ zur Rohrachse und aus Massenkräften durch Reibkräfte zwischen der Rohrschelle und der Rohrwand aufgenommen werden. Dabei ist eine Zugkraftbeanspruchung der Rohrschelle über die Gelenkstrebe nicht als kritische Beanspruchung einzustufen, weil sie die Rohrschelle in Richtung ihrer stabilen Mittellage zieht. Zu beachten sind vielmehr auf die Rohrschelle drückende Gelenkstrebenkräfte; in bezug auf diese muß die Verdreh- und Verschiebesicherheit der Halteeinrichtung mit ihrer Rohrschelle gewährleistet sein und nachgewiesen werden, und zwar durch Reibschluß der Rohrschelle unter Einwirkung einer definierten Druckkraft bei definierten Abweichungen der Gelenkstrebenachse von der Normalen der Rohrwand. Bisher wurde dieser Reibschluß durch eine relativ hohe Vorspannung der Rohrschelle auf dem Rohr erzielt. Dadurch kommt es zu einer lokalen Zusatzbeanspruchung der Rohrwand. Das Rohr kann gegen scharfe Kanten des Rohrleitungsbettes gedrückt und dadurch beschädigt werden.

Aus der DE-A- 25 16 092 ist eine Rohrschelle bekannt, mit der das Rohr nur punktweise gehalten wird. Dadurch werden relativ spitze Kanten der sogenannten Aufnahmeplatten gegen das Rohr gedrückt, so daß das Rohr dadurch beschädigt werden kann.

Aufgabe der Erfindung ist es, eine Halteeinrichtung für Rohrleitungen der eingangs definierten Art zu schaffen, welche eine große Sicherheit gegen unerwünschte Verdreh- und Verschiebebewegungen aufweist und die Rohrwand nicht durch eine große Vorspannung der Rohrschelle zusätzlich beansprucht. Auch soll die Rohrwand nicht gegen scharfe Kanten gedrückt werden.

Die Aufgabe wird gemäß der Erfindung dadurch gelöst, daß das Schellenjoch im Rohrleitungsbett zwei Auflagerflächen zur Aufnahme des Rohres aufweist, daß die Auflagerflächen nur einen Bruchteil des dem Rohrleitungsbett zuzuwendenden Bogenstücks der Außenumfangsfläche des Rohres überstreichen und daß der Krümmungsradius (Bettungsradius) der Auflagerflächen größer als der Radius des Rohres ist.

Dadurch wird der Kraftfluß der Einspannkräfte auf eng begrenzte Auflagerflächen, die aber keine scharfen Kanten aufweisen, die das Rohr beschädigen könnten, lokalisiert.

Vorteilhafte Weiterbildungen sind in den Ansprüchen 2 bis 12 angegeben.

Beispielsweise hat die Schellenschlaufe eine Dicke $D_S = k \cdot W_R$ und eine Breite $B_S = \frac{m}{n} \cdot W_R$, wobei $W_R$ die Wanddicke des Rohres, k und m dimensionslose Faktoren mit $k < 1$, $m > 1$ und n die Anzahl der Schellenschlaufen bedeuten.

Die Wanddicke der Schellenschlaufe ist z.B. um den Faktor k ($k < 1$) geringer als die Wanddicke des zu halternden Rohres, bevorzugt deutlich geringer, wobei k etwa im Bereich zwischen 0,1 und 0,5 liegen kann. Dabei sind die kleineren k-Werte bei Rohrleitungen mit größerer Wanddicke, die größeren k-Werte bei Rohrleitungen mit kleinerer Wanddicke angezeigt. Durch diese reduzierte Wanddicke für die Schellenschlaufe entsteht eine zur guten Anpassung der Schellenschlaufe an die Rohrwand im Umschlingungsbereich erforderliche Biegeweichheit, so daß die Verformung des oberen Rohrteiles wenig oder praktisch nicht behindert wird. Wenn die Schellenschlaufe in Gewindeenden ausläuft, ist die über diese Gewindeenden einzubringende Spannkraft entsprechend gering. Die geringe Wanddicke der Schellenschlaufe hat ferner den Vorteil, daß Temperaturdifferenzen zwischen Rohrwand und Schellenschlaufe und damit Spannungsänderungen aus unterschiedlichen Wärmedehnungen gering bleiben.

Bevorzugt sind Auflagerflächen beidseits einer Symmetrieebene spiegelsymmetrisch zueinander angeordnet, wobei die Symmetrieebene durch die Rohrleitungsachse und die Mitte des Schellenjochs verläuft. Der Spreizwinkel ($2\gamma$), der von der Rohrleitungsachse als Scheitelpunkt und den Mittellinien der beiden Auflagerflächen aufgespannt wird, liegt im Bereich $30° \leq 2\gamma \leq 100°$ bei entsprechend etwas größerem Bogenstück für das Rohrleitungsbett und die anliegende Außenumfangsfläche der Rohrleitung. Auf diese Weise erhält man zwei relativ große Kraftvektoren bei der Zerlegung der Spann- und Gelenkstrebenkraft, wobei diese beiden Kraftvektoren statisch bestimmt von den Auflagerflächen zur Rohrleitungsachse bzw. durch den Rohrleitungsmittelpunkt verlaufen. Man erhält so große Haftreibungskräfte und eine günstige Kraftangriffszone für die elastische Verformung der unteren und oberen Rohrleitungshälften.

Eine der günstigsten Ausführungsformen besteht darin, daß von zwei Auflagerflächen jede in einem Außenbereich des Rohrleitungsbettes angeordnet ist, wobei der Spreizwinkel (2γ) der Auflager mindestens 60° beträgt.

Beispielsweise überstreicht eine Auflagerfläche ein Teilbogenstück, welches ein Zehntel bis ein Fünftel des Bogenstücks des Rohrleitungsbettes ausmacht.

Beispielsweise ist eine Auflagerfläche Teil eines Auflagers, das als Bauteil zwischen Schellenjoch und Rohr angeordnet ist.

Die Auflager haben bevorzugt zu ihrer Basis rechtwinklig abgebogene Schenkel. Diese Schenkel umgreifen die Stirnseiten des Schellenjochs und werden insbesondere in Aufnahmenuten an den Stirnseiten des Schellenjochs gelegt. Die Auflager verlaufen dann mit ihrer Basis parallel zur Rohrleitungsachse auf dem Rohrleitungsbett. Die Rohrleitung findet so mit ihrem gebetteten Bogenstück eine Auflage längs zweier Linien oder schmaler Streifen, die spiegelsymmetrisch bezüglich der Rohrschellen-Symmetrieebene angeordnet sind.

Die Auflager können als Einlegebleche oder auch als Zwischenbleche am Rohrleitungsbett der Rohrschelle, z.B. durch Punktschweißen, befestigt sein; dann würden einfache Streifen ohne abgewinkelte Schenkel genügen.

Der Bettungsradius der Auflagerflächen im Schellenjoch entspricht bevorzugt dem 1,05 bis 1,15-fachen des Außenradius des Rohres. Aufgrund dieser Bettung des Rohres im Schellenjoch wird die Verformung des Rohrquerschnitts bei Einwirkung einer Gelenkstrebendruckkraft besonders gering gehalten.

Auch im Berührungsbereich zwischen der Schellenschlaufe und der Rohrwand kann ein Einlegeblech vorgesehen sein, welches die Rohrwand vor Korrosionsangriffen schützt, wenn die Rohrwand aus einem Werkstoff besteht, der höherwertig ist als derjenige der Schellenschlaufe (z.B. austenitische Rohrwand, ferritische Schellenschlaufe).

Die Breite der relativ dünnwandigen Schellenschlaufe beträgt in der Regel ein Vielfaches der Wanddicke $W_R$ der Rohrwand, und zwar das m-fache, wobei m etwa im Bereich zwischen 5 und 10 liegt. Werden pro Rohrschelle mehrere Schellenschlaufen verwendet, dann verringert sich die Breite der einzelnen Schellenschlaufe entsprechend um den Faktor $\frac{1}{n}$, wobei n die Anzahl der Schellenschlaufen ist.

Eine bevorzugte biegeweiche Ausführungsform der Schellenschlaufe ist ein gebogenes Flacheisen. Die einzelne Schellenschlaufe kann jedoch auch aus einem flachen Drahtgeflecht, insbesondere einem zu einem flachen Strang gedrillten Stahlseil, bestehen; dieses ist biegeweich oder biegeschlaff. Die Flachstahlseil-Form ist im Vergleich zu einer Rundstahlseil-Form vorteilhafter, weil der Flächenkontakt mit der Rohraußenwand bei der zuerst genannten Form wesentlich größer ist und Temperaturänderungen der Rohrwand schneller auf die Schellenschlaufe übertragen werden. Die Schellenschlaufe kann auch aus einer flachen Blechlamellen-Schichtung bestehen.

Gemäß einer Weiterbildung der Erfindung sind die Enden der Schellenschlaufe mit je einem Gewindeschaft verbunden, insbesondere verschweißt, und es greifen die Gewindeschäfte durch Schlitze der Schellenjochschenkel, wobei auf ihre über die Jochschenkel-Unterseite überstehenden Schaften Spannmuttern aufschraubbar sind, mit denen die Schellenschlaufe vorspannbar ist.

Zu den Spannmuttern gehören insbesondere noch Druckfedern, Unterlegscheiben und gesonderte Sicherungsmuttern (oder Kontermuttern). Insbesondere für Rohrleitungen, die ein Medium niedriger Temperatur führen, z.B. Kühlwasserleitungen, sind Halteeinrichtungen vorteilhaft, die aus einem faserverstärkten, insbesondere kohlefaserverstärkten Kunststoff bestehen. Bei biegeschlaffen Schellenschlaufen, die insbesondere aus geflochtenen oder verdrillten Flachseilen bestehen, kann der Umschlingungswinkel sogar größer sein als 180°, was eine noch weiter vergrößerte Reibkraft zur Folge hat.

Beispielsweise ist mit der Schellenschlaufe ein Spannschraubenschaft verbunden.

Die Schenkel des Schellenjochs können abgeflacht sein.

Durch die Erfindung, d.h. die konstruktive Gestaltung und Bemessung der Halteeinrichtung mit ihrer Rohrschelle, wird eine Verspannung zwischen Rohr und Rohrschelle erreicht, die insbesondere durch folgende Vorteile gekennzeichnet ist:

a) Geringe erforderliche Vorspannung zur Erzeugung des Reibschlusses zwischen Rohrschelle und Rohrwand.

b) Geringer Abfall der Vorspannung bei Einwirkung einer drückenden Gelenkstrebenkraft.

c) Praktisch gleichbleibende Einspannverhältnisse unabhängig von fertigungstoleranz-bedingten unterschiedlichen Rohrdurchmessern bei gleichem Bestellmaß.

Die Proportionen von Schellenjoch und Schellenschlaufe sind gestuft anpaßbar an dünnwandige, mittelwandige und dickwandige Rohre, so daß sich für alle Rohr-Schelle-Verbindungen etwa gleich gute Verspannungsverhältnisse ergeben. Diese Stufung ist auch hinsichtlich der Festigkeit sinnvoll, da die Kraftgrößen, die von der Halteeinrichtung in Zug- und Druckrichtung aufgenommen werden müssen, von der Dickwandigkeit des Rohres abhängen.

Wie bereits erwähnt, können mehr als eine Schellenschlaufe einem Schellenjoch zugeordnet sein, dessen Jochbreite, also dessen Abmessung in einer rohrachsparalleler Richtung, entsprechend groß ist, so daß bei zwei Schellenschlaufen zwei Schlitzpaare im Schellenjoch untergebracht sein können. Es ist auch möglich, zwei Schellenjoche parallel zueinander vorzusehen, mit je einer Schellenschlaufe, wobei dann das Traglaschenpaar für den Gelenkbolzen der Gelenkstrebe über die beiden Schellenjoche geschweißt ist. Damit sind noch höhere Kraftgrößen am Rohrhalterungspunkt realisierbar.

Weitere Merkmale und Vorteile der Erfindung, ihr Aufbau und ihre Wirkungsweise werden im folgenden anhand in der Zeichnung dargestellter Ausführungsbeispiele erläutert. In der Zeichnung zeigen, zum Teil in vereinfachter schematischer Darstellung:

Figur 1 in perspektivischer Darstellung eine sogenannte Bügelschelle, welche dem Stand der Technik entspricht,

Figur 2 eine Halteeinrichtung nach der Erfindung im Aufriß, wobei die Gelenkstrebe und deren Verankerung an einer Gebäudestruktur weggelassen sind,

Figur 3 die Seitenansicht auf den Gegenstand nach Figur 2, verkleinert, wobei die Spannschrauben weggelassen sind,

Figur 4 ein zweites Ausführungsbeispiel, bei welchem die Schellenschlaufe durch die Spannschrauben unter Zwischenschaltung von Tellerfederpaketen spannbar ist,

Figur 5 eine aus einem Flachseil bzw. flachen Drahtgeflecht bestehende Schellenschlaufe, perspektivisch im Ausschnitt,

Figur 6 eine Schellenschlaufe, die aus einem faserverstärkten Kunststofflamellenband besteht, perspektivisch im Ausschnitt, und

FIG 7 eine Schellenschlaufe, die als geflochtenes, flaches, biegeschlaffes Seil ausgebildet ist und aus einzelnen Seiladern mit Faserarmierung und Kunststoffummantelung besteht.

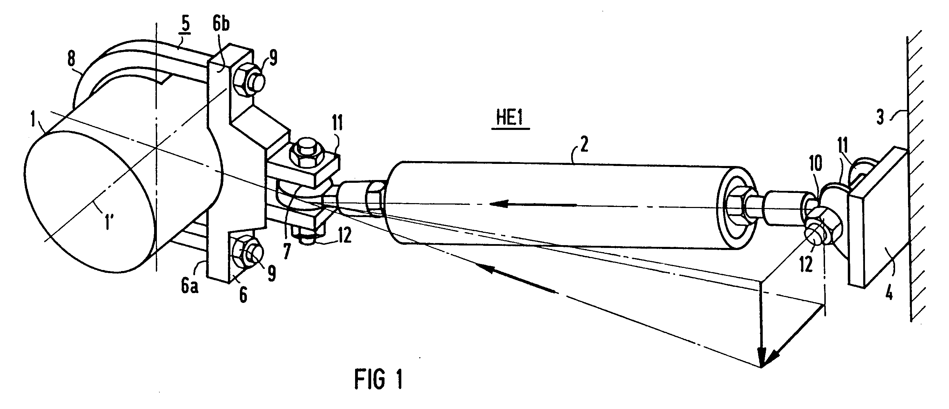

Die in Figur 1 dargestellte Halteeinrichtung HE1 für eine Rohrleitung 1, die dem Stand der Technik angehört, wird insbesondere in Kraftwerken eingesetzt. Eine Gelenkstrebe 2 der Halteeinrichtung HE1 ist an ihrem einen Ende an einem mit einer Gebäudestruktur 3 verbundenen Anker 4 und an ihrem anderen Ende an einer die Rohrleitung 1 kraft- und reibschlüssig umgreifenden Rohrschelle 5 angelenkt. Die Rohrschelle 5 besteht aus einem das Rohr 1 untergreifenden, eine Gelenkstrebenkupplung 7 aufweisenden Schellenjoch 6 und aus einer das Rohr 1 übergreifenden Schellenschlaufe 8. Die Enden der Schellenschlaufe 8, welche im dargestellten Fall als ein Stahlbügel ausgeführt ist, sind an Schenkeln 6a, 6b des Schellenjochs 6 mit einstellbarer Rohrschellen-Vorspannkraft verankert. Hierzu sind die Enden der Schellenschlaufe 8 mit jeweils einem (nicht ersichtlichen) Gewinde versehen, und auf diesen Gewinden ist jeweils eine Spannmutter 9 aufgeschraubt, so daß durch Anziehen der Spannmuttern 9 das Schellenjoch 6 und die Schellenschlaufe 8 gegen den Außenumfang des Rohres 1 gepreßt werden.

Die Gelenkstrebenkupplung 7, sowie eine weitere Gelenkstrebenkupplung 10 am anderen Ende der Gelenkstrebe 2 weisen jeweils zwei zueinander beabstandete Laschen 11 auf, welche am Schellenjoch 6 bzw. am Anker 4 festgeschweißt und von einem Gelenkbolzen 12 durchdrungen sind, wobei an diesen Gelenkbolzen 12 die Gelenkstrebe 2 mit nicht näher bezeichneten Gelenkaugen ihrer beiden Enden angelenkt ist.

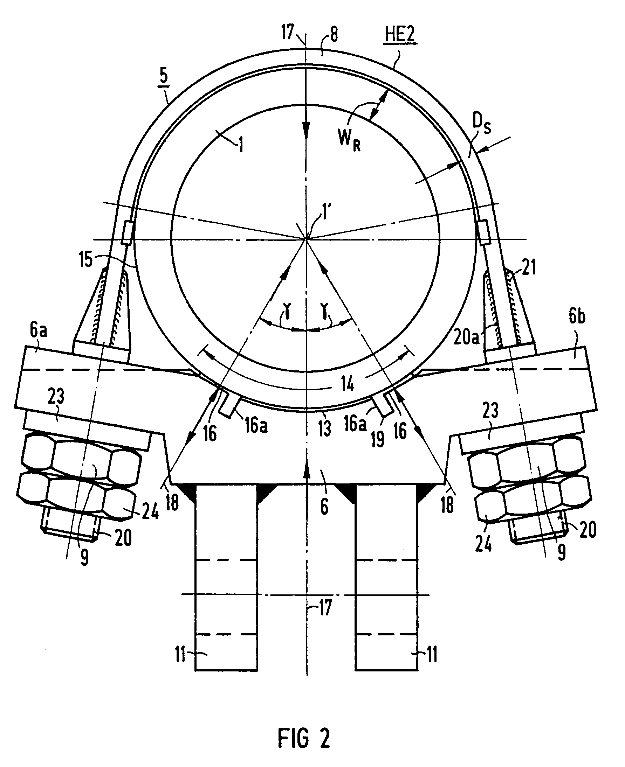

Durch die Erfindung, die im folgenden erläutert wird, ist eine Halteeinrichtung HE2 (Figur 2) geschaffen worden, bei welcher bei gegebener Montagevorspannkraft sehr hohe Reibkräfte und ein sehr niedriger Verspannungskennwert erreicht werden können. Dabei bleiben die Reibkräfte zwischen Schellenschlaufe 8 und Schellenjoch 6 einerseits und dem Außenumfang des Rohres 1 andererseits während des Betriebes in ausreichender Höhe aufrechterhalten und ein Schieben oder Drehen wird vermieden.

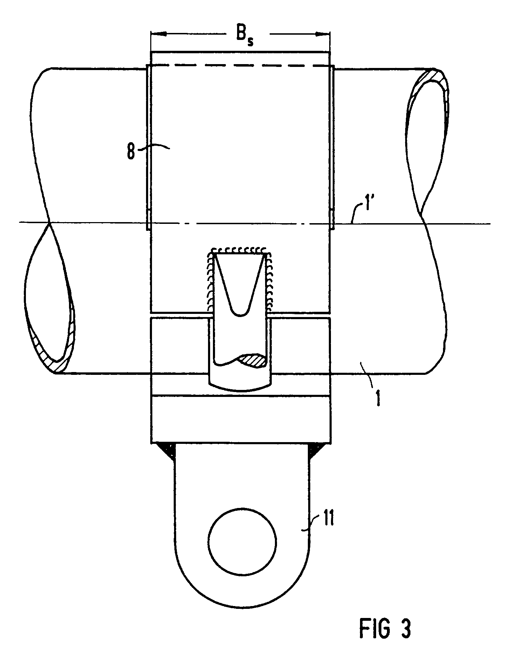

In den Figuren 2 bis 4 sind zu Figur 1 gleichartige Teile auch mit den gleichen Bezugszeichen versehen. Die Ausbildung der Gelenkstrebe 2 und ihrer Gelenkkupplungen 7 und 10 der in den Figuren 2 bis 4 dargestellten Halteeinrichtung HE2 entspricht der Ausbildung in Figur 1, weshalb von einer Darstellung in den Figuren 2 bis 4 abgesehen wurde. Es soll sich beim Erfindungsgegenstand also auch um eine Halteeinrichtung HE2 für Rohrleitungen 1 handeln, die insbesondere in Kraftwerken ihre Anwendung findet. Dazu gehören insbesondere auch Kernkraftwerke, bei denen hohe Sicherheitsanforderungen an die Rohrschellen gestellt werden. Die Halteeinrichtung HE2 besteht aus einem ein Rohr 1 untergreifenden Schellenjoch 6 und aus mindestens einer das Rohr 1 übergreifenden Schellenschlaufe 8. Die Enden der Schellenschlaufe 8 sind an Schenkeln 6a, 6b - zur Einstellung der Rohrschellen-Vorspannkraft - einstellbar verankert. Die Schellenschlaufe 8 hat eine Dicke $D_S = k \cdot W_R$ und eine Breite $B_S = m/n \cdot W_R$, wobei $W_R$ die Wanddicke der Rohrwand und k, m, n dimensionslose Faktoren bedeuten. Dabei ist k < 1, liegt etwa im Bereich zwischen 0,1 und 0,5 und ist z.B. 0,46. Die Breite $B_S$ beträgt ein Vielfaches der Wanddicke $W_R$ des Rohres 1; m liegt etwa im Bereich zwischen 5 und 10. n ist die Anzahl der pro Halteeinrichtung HE2 verwendeten Schellenschlaufen 8. Die Schenkel 6a, 6b des Schellenjochs 6 sind zweckmäßig nach Art eines Balkens gleicher Festigkeit, wie dargestellt, auf ihren rohrzugewandten Seiten abgeflacht, so daß sich ein keilförmiges, nach außen verjüngtes Schenkelprofil ergibt. Das Rohr 1 ist in einem konkaven Rohrleitungsbett oder Rohrbett 13 des Schellenjochs 6 gelagert. Der Bettungsradius der Auflagerflächen im Rohrleitungsbett 13 ist dabei größer als der Radius des Rohres 1. Zwischen dem Rohrleitungsbett 13 und dem anliegenden Bogenstück 14 der Außenumfangsfläche 15 des Rohres 1 können Auflager oder Auflagerleisten 16 eingefügt sein. Die Auflagerflächen sind dann nicht direkt Teil des Rohrleitungsbettes 13, sondern Teil der Auflagerleisten 16.

Die Auflagerflächen überstreichen nur Bruchteile des Bogenstücks 14. Der Kraftfluß der Einspannkräfte ist so auf eng begrenzte Auflagerflächen am Schellenjoch 6 lokalisiert.

Die Auflagerleisten 16 sind beidseits einer Symmetrieebene 17-17 (dieses ist eine vertikale Achsebene durch die Rohrleitungsmitte) spiegelsymmetrisch zueinander angeordnet. Die Symmetrieebene 17-17 ist auch durch die Mitte des Schellenjochs 6 gelegt. Der Spreizwinkel 2$\gamma$, der von der Rohrleitungsachse 1' als Scheitelpunkt und den Mittellinien 18 der beiden Auflagerleisten 16 aufgespannt wird, liegt vorzugsweise im Bereich zwischen 30° und 100°, bei entsprechend etwas grösserem Bogenstück 14 für das Rohrleitungsbett 13 und für die anliegende Außenumfangsfläche des Rohres 1. Besonders günstig ist, wie dargestellt, die Anordnung von zwei Auflagerleisten 16, von denen jede in einem Außenbereich des Rohrleitungsbettes 13 angeordnet ist, wobei der Spreizwinkel 2$\gamma$ mindestens 60° beträgt. Eine einzelne Auflagerleiste 16 überdeckt ein Teilbogenstück, welches bevorzugt etwa einem Zehntel bis einem Fünftel des Bogenstücks 14 entspricht. Die Auflagerleisten 16 dürfen nicht zu schmal sein, damit die Flächenpressung nicht zu groß wird, andererseits auch nicht zu breit, damit ein definierter, hinreichend lokalisierter Kraftfluß vorliegt.

Die Auflagerleisten 16 können in ihrer Lage formschlüssig befestigt sein, indem sie mit stirnseitigen Schenkeln 16a ihrer winklig abgebogenen Enden in stirnseitige Randausnehmungen 19 des Schellenjochs 6 fassen. Auf die Randausnehmungen 19 kann verzichtet werden, wenn zur Lagensicherung die Schenkel 16a an den Stirnseiten des Schellenjochs 6 z.B. durch Punktschweißen fixiert werden.

Die Enden der Schellenschlaufe 8 sind mit je einem Gewindeschaft 20 verbunden. Als sehr günstige Verbindung hat sich eine Schweißverbindung erwiesen, wobei die Schweißnähte bei 21 angedeutet sind. Die Gewindeschäfte 20 sind auf ihrer an das entsprechende Schellenschlaufenende angeschlossenen Seite konusförmig verjüngt und sind dort in einen Schlitz 20a im Schellenschlaufenende eingeschweißt. Die Gewindeschäfte 20 greifen durch Schlitze der Schellenjochschenkel 6a, 6b und stehen so weit über die Schellenjochschenkel 6a, 6b über, daß genügend Platz zum Aufsetzen von Unterlegscheiben 23, zum Aufschrauben der Spannmuttern 9 und zum Aufschrauben von Kontermuttern 24 gegeben ist. Durch mehr oder weniger starkes Anziehen der Spannschrauben 9 wird die Betriebsvorspannung in der Schellenschlaufe 8 und damit die Größe der Reibkräfte zwischen Schellenschlaufe 8 und Außenumfang der Rohrleitung 1 bestimmt.

Die Schellenschlaufe 8 besteht im dargestellten Beispiel aus einem gebogenen Flachstahl, der aufgrund seiner im Verhältnis zur Wanddicke $W_R$ des Rohres 1 geringen Wanddicke $D_S$ biegeweich ist. Die Schellenschlaufe 8 kann aber auch aus einer Blechlamellenschichtung bestehen. In diesem Fall müssen an den Enden der Schellenschlaufe 8 die einzelnen Blechlamellen miteinander und mit dem Gewindeschaft 20 verbunden sein, so daß die Zugkrafteinleitung gleichmäßig auf alle Lamellen erfolgt, wozu eine Schweißverbindung ebenfalls geeignet ist. Es können für die Schellenschlaufe 8 indessen auch zugspannungsresistente Drahtgeflechte, also insbesondere flach gedrillte Stahlseile, Verwendung finden. Diese haben den Vorteil, daß sie biegeschlaff sind.

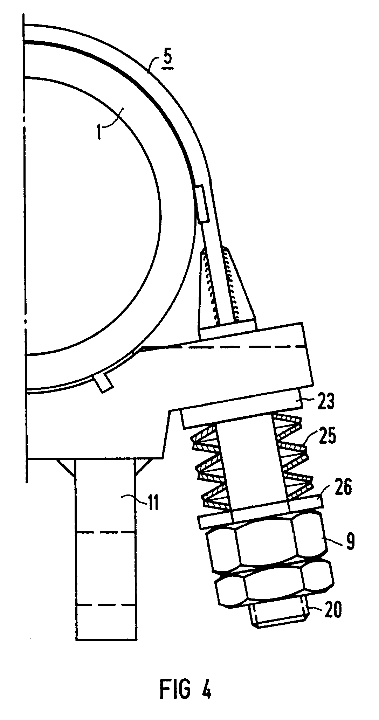

Figur 4 zeigt im Ausschnitt ein Tellerfederpaket 25, welches zwischen zwei Beilagscheiben 23 und 26 der Spannschraube 9 eingefügt ist. Deshalb ist im Vergleich zur Ausführung nach Figur 2 der Spannschraubenschaft 20 entsprechend verlängert. Die Charakteristik des Tellerfederpakets 25 geht also in die Gesamtcharakteristik der Rohrschelle ein.

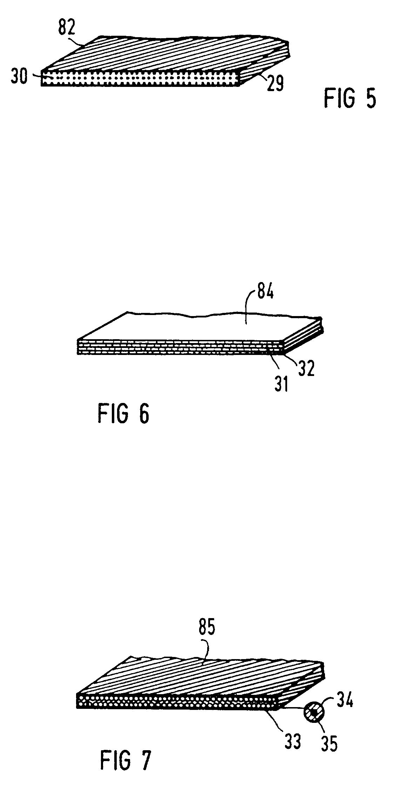

Figur 5 zeigt eine Ausführungsvariante, bei der das flache Band 82 der Schellenschlaufe 8 aus einem flachen Drahtgeflecht 29 mit einzelnen Drähten 30 besteht. Ebenso wie für Lamellen wird für die einzelnen Drähte 30 zweckmäßigerweise ein austenitischer Stahl verwendet, wobei die einzelnen Stahldrähte 30 im Bereich der Schweißverbindung 21 auch miteinander verschweißt werden. Solche Schellenschlaufen 8 sind aufgrund der Lamellierung oder des Seilaufbaus biegeschlaff. Es empfiehlt sich daher, daß die Schellenschlaufe 8 über einen großen Winkel, z.B. 200°, am Rohr 1 anliegt. Die Reibung ist dann relativ groß, was erwünscht ist.

Bei der Ausführungsvariante nach Figur 6 bildet eine Mehrzahl oder Vielzahl von faserverstärkten Kunststofflamellen 32 ein flexibles Mehrschichtlamellenband 84 für die Schellenschlaufe 8. Jede der Lamellen 32 enthält jeweils ein Gewirr von Kohlefasern 31. Das faserverstärkte Flachband bzw. Mehrschichtenlamellenband 84 kann mit seinen an den Enden frei hervorstehenden Kohlefasern 31 in entsprechenden Formpressen derart behandelt werden, daß an seinen Enden unter inniger Verbindung mit den Kohlefasern 31 Spannschraubenschäfte 20 angepreßt werden können, wobei das Kunststoffmaterial der Spannschraubenschäfte 20 mit demjenigen, aus dem die Lamellen 32 bestehen, identisch ist.

Bei der Ausführungsvariante nach Figur 7 weist die Schellenschlaufe 8 ein geflochtenes, flaches, biegeschlaffes Seil 85 oder Flachband auf, und die einzelnen Seiladern 33 weisen eine Faserarmierung 35 und eine Kunststoffummantelung 34 auf. Die einzelnen Seiladern 33 können nach der Verdrillung durch eine Wärme- oder Klebbehandlung noch miteinander oberflächlich verbunden werden. Die Kohlefasern aus dem Flachband 85 sind auch integraler Bestandteil der Spannschraubenschäfte 20, deren Kunststoffmaterial das gleiche ist wie dasjenige der Kunststoffummantelung 34 der einzelnen Seiladern 33. In Figur 7 ist der Querschnitt einer einzelnen Seilader vergrößert herausgezeichnet.

## Patentansprüche

1. Halteeinrichtung für ein Rohr (1), insbesondere für ein Rohr (1) einer Rohrleitung in einem Kraftwerk, mit einer Gelenkstrebe (2), die mit einem Ende an einem mit einer Gebäudestruktur (3) zu verbindenden Anker (4) und mit ihrem anderen Ende an eine das Rohr (1) kraft- und reibschlüssig zu umgreifenden Rohrschelle (5) angelenkt ist, wobei die Rohrschelle (5) mindestens eine Schellenschlaufe (8) und ein Schellenjoch (6) mit einem Rohrleitungsbett (13) aufweist,
   **dadurch gekennzeichnet,** daß das Schellenjoch (6) im Rohrleitungsbett (13) zwei Auflagerflächen zur Aufnahme des Rohres (1) aufweist, daß die Auflagerflächen nur einen Bruchteil des dem Rohrleitungsbett (13) zuzuwendenden Bogenstücks (14) der Außenumfangsfläche (15) des Rohres (1) überstreichen und daß der Krümmungsradius (Bettungsradius) der Auflagerflächen größer als der Radius des Rohres (1) ist.

2. Halteeinrichtung nach Anspruch 1,
   **dadurch gekennzeichnet,** daß die Schellenschlaufe (8) eine Dicke $D_S = k \cdot W_R$ und

eine Breite $B_S = \frac{m}{n} \cdot W_R$ hat, wobei $W_R$ die Wanddicke des Rohres (1), k und m dimensionslose Faktoren mit $k < 1$, $m > 1$ und n die Anzahl der Schellenschlaufen (8) bedeuten.

3. Halteeinrichtung nach einem der Ansprüche 1 oder 2,
   **dadurch gekennzeichnet,** daß zwei Auflagerflächen mit einem Bettungsradius, der dem 1,05 bis 1,15-fachen des Radius des Rohres (1) entspricht, beidseits einer Symmetrieebene (17-17) spiegelsymmetrisch zueinander angeordnet sind, wobei die Symmetrieebene (17-17) durch die Rohrachse (1') und die Mitte des Schellenjochs (6) verläuft, und daß der Spreizwinkel ($2\gamma$), der von der Rohrachse (1') als Scheitelpunkt aus durch die Mittellinien (18) der beiden Auflagerflächen aufgespannt wird, im Bereich $30° \leq 2\gamma \leq 100°$ liegt bei entsprechend etwas größerem Bogenstück für das Rohrleitungsbett (13) und für die anliegende Außenumfangsfläche (15) des Rohres (1).

4. Halteeinrichtung nach einem der Ansprüche 1 bis 3,
   **gekennzeichnet durch** zwei Auflagerflächen, von denen jede in einem Außenbereich des Rohrleitungsbettes (13) angeordnet ist, wobei der Spreizwinkel ($2\gamma$) der Auflagerflächen mindestens $60°$ beträgt.

5. Halteeinrichtung nach einem der Ansprüche 1 bis 4,
   **dadurch gekennzeichnet,** daß eine Auflagerfläche ein Teilbogenstück überstreicht, welches ein Zehntel bis ein Fünftel des Bogenstücks des Rohrleitungsbettes (13) ausmacht.

6. Halteeinrichtung nach einem der Ansprüche 1 bis 5,
   **dadurch gekennzeichnet,** daß mindestens eine Auflagerfläche Teil eines Auflagers (16) ist, das zwischen Schellenjoch (6) und Rohr (1) angeordnet ist.

7. Halteeinrichtung nach einem der Ansprüche 1 bis 6,
   **dadurch gekennzeichnet,** daß das Auflager (16) als Einlegeblech ausgeführt ist, welches mit abgebogenem Schenkel (16a) an der Stirnseite des Schellenjochs (6) angreift.

8. Halteeinrichtung nach einem der Ansprüche 1 bis 7,
   **dadurch gekennzeichnet,** daß zur formschlüssigen Lagensicherung das Auflager (16) mit einem Schenkel (16a) in eine stirnseitige Randausnehmung (19) des Schellenjochs (6) faßt.

**9.** Halteeinrichtung nach einem der Ansprüche 1 bis 8,
**dadurch gekennzeichnet,** daß die Enden der Schellenschlaufe (8) mit je einem Gewindeschaft (20) verbunden sind, daß die Gewindeschäfte (20) durch Schlitze in Schenkeln (6a, 6b) des Schellenjochs (6) greifen, und daß auf ihre über die Jochschenkelunterseite überstehenden Schaftenden Spannmuttern (9) aufschraubbar sind, mit denen die Schellenschlaufe (8) vorspannbar ist.

**10.** Halteeinrichtung nach einem der Ansprüche 1 bis 9,
**dadurch gekennzeichnet,** daß als Mittel zur Einstellung der Rohrschellen-Vorspannkraft Spannschrauben (9) vorgesehen sind und daß die Spannschrauben (9) mit Druckfedern (25), insbesondere Tellerfedern, ausgerüstet sind.

**11.** Halteeinrichtung nach einem der Ansprüche 1 bis 10,
insbesondere für eine Rohrleitung, die ein Medium niedriger Temperatur führt, **dadurch gekennzeichnet,** daß die Schellenschlaufe (8) aus einem gebogenen Flachstahl, aus einem flachen Drahtgeflecht, aus einer flachen Blechlamellenschichtung, aus einem faserverstärkten Kunststoff und/oder aus einem kohlefaserverstärkten Kunststoff besteht und/oder als flexibles Mehrschichtlamellenband (84) bestehend aus einer Mehrzahl von faserverstärkten Kunststofflamellen und/oder als geflochtenes, flaches, biegeschlaffes Seil (85) ausgebildet ist, bei dem die einzelnen Seiladern (33) eine Faserarmierung (31) und eine Kunststoffummantelung (34) aufweisen.

**12.** Halteeinrichtung nach einem der Ansprüche 1 bis 11,
**dadurch gekennzeichnet,** daß je ein aus dem gleichen Material wie die Schellenschlaufe (8) bestehender Spannschraubenschaft (20) mit den Enden des Schellenbandes (8) einstückig verbunden ist.

**Claims**

**1.** Retaining device for a pipe (1), in particular for a pipe (1) of a pipeline in a power plant, with a hinged tie (2) which is coupled at one end to an anchor (4), which is to be connected to a building structure (3), and at its other end to a pipe clamp (5), which is to embrace the pipe (1) in a non-positive and frictional manner, the pipe clamp (5) comprising at least one clamp loop (8) and a clamp yoke (6) with a pipeline bed (13), characterised in that the clamp yoke (6) comprises two support surfaces in the pipeline bed (13) to hold the pipe (1), that the support surfaces only extend over a fraction of the arc (14) of the outer circumferential surface (15) of the pipe (1) which is to face the pipeline bed (13), and that the radius of curvature (bedding radius) of the support surfaces is greater than the radius of the pipe (1).

**2.** Retaining device according to claim 1, characterised in that the clamp loop (8) is of a thickness $D_S = k \cdot W_R$ and a width $B_S = \frac{m}{n} \cdot W_R$, in which $W_R$ denotes the wall thickness of the pipe (1), k and m denote dimensionless factors with $k < 1$, $m > 1$ and n denotes the number of clamp loops (8).

**3.** Retaining device according to claim 1 or 2, characterised in that two support surfaces with a bedding radius corresponding to 1.05 to 1.15 times the radius of the pipe (1) are arranged in a specularly symmetrical manner on both sides of a plane of symmetry (17-17), the plane of symmetry (17-17) extending through the pipe axis (1') and the centre of the clamp yoke (6), and that the angle of spread ($2\gamma$) which is spanned by the centre lines (18) of the two support surfaces from the pipe axis (1'), as vertex, outwards is around $30° \leq 2\gamma \leq 100°$ when the arc for the pipeline bed (13) and for the supported outer circumferential surface (15) of the pipe (1) is of a correspondingly slightly greater dimension.

**4.** Retaining device according to one of claims 1 to 3, characterised by two support surfaces, each of which is arranged in an outer region of the pipeline bed (13), the angle of spread ($2\gamma$) of the support surfaces being at least $60°$.

**5.** Retaining device according to one of claims 1 to 4, characterised in that one support surface extends over a partial arc which constitutes one tenth to one fifth of the arc of the pipeline bed (13).

**6.** Retaining device according to one of claims 1 to 5, characterised in that at least one support surface is part of a support (16) which is arranged between the clamp yoke (6) and the pipe (1).

**7.** Retaining device according to one of claims 1 to 6, characterised in that the support (16) is constructed as an insertion plate which acts with a downward bent leg (16a) on the front side of the clamp yoke (6).

**8.** Retaining device according to one of claims 1 to 7, characterised in that the support (16) engages with a leg (16a) in a front-side edge recess (19) in the clamp yoke (6) in order to positively secure its position.

**9.** Retaining device according to one of claims 1 to 8, characterised in that the ends of the clamp loop (8) are connected to a respective screwed shank (20), that the screwed shanks (20) extend through slits in legs (6a, 6b) of the clamp yoke (6), and that tension nuts (9) can be screwed onto their shank ends which project beyond the underside of the yoke legs, by means of which nuts the clamp loop (8) can be pre-tensioned.

**10.** Retaining device according to one of claims 1 to 9, characterised in that tension bolts (9) are provided as means for adjusting the pipe clamp pre-tensioning force, and that the tension bolts (9) are provided with compression springs (25), in particular Belleville springs.

**11.** Retaining device according to one of claims 1 to 10, in particular for a pipeline carrying a medium at a low temperature, characterised in that the clamp loop (8) consists of a curved flat steel bar, of a flat wire netting, of a flat laminated sheet-metal arrangement, of a fibre-reinforced plastic and/or of a carbon fibre-reinforced plastic and/or is formed as a flexible multi-layer laminated strip (84) consisting of a plurality of fibre-reinforced plastic laminae and/or of a braided, flat, non-rigid cable (85), in which the individual cable cores (33) have a fibre reinforcement (31) and a plastic sheathing (34).

**12.** Retaining device according to one of claims 1 to 11, characterised in that a respective tension bolt shank (20), which consists of the same material as the clamp loop (8), is integral with the ends of the clamp strap (8).

**Revendications**

**1.** Dispositif de retenue pour un tuyau (1), notamment pour un tuyau (1) d'une conduite tubulaire dans une centrale électrique, comportant une entretoise articulée (2), qui est articulée par une extrémité sur une pièce d'ancrage (4) devant être reliée à une structure (3) d'un bâtiment, et par son autre extrémité à un collier (5) pour tuyau, qui doit entourer le tuyau (1) selon une liaison d'adhérence et de frottement, le collier (5) pour tuyau possédant au moins une boucle (8) et un étrier (6) comportant un siège (13) d'appui de la conduite tubulaire,

caractérisé par le fait que l'étrier (6) du collier possède, dans le siège (13) d'appui de la conduite tubulaire, deux surfaces d'appui servant à loger le tuyau (1), que les surfaces d'appui s'étendent sur seulement une fraction de l'arc de cercle (14), qui doit être tourné vers le siège (13) d'appui de la conduite tubulaire, de la surface périphérique extérieure (15) du tuyau (1) et le rayon de courbure (rayon d'assise) des surfaces d'appui est supérieur au rayon du tuyau (1).

**2.** Dispositif de retenue suivant la revendication 1, caractérisé par le fait que la boucle (8) du collier possède une épaisseur $D_S = k \cdot W_R$ et une largeur $B_S = m/n \cdot W_R$, $W_R$ étant l'épaisseur de la paroi du tuyau (1), et k et m des facteurs sans dimension avec $k < 1$, $m > 1$ et n le nombre des boucles (8) du collier.

**3.** Dispositif de retenue suivant l'une des revendications 1 ou 2, caractérisé par le fait que deux surfaces d'appui possédant un rayon d'assise, qui est compris entre 1,05 et 1,15 fois le rayon du tuyau (1), sont disposées symétriquement l'une de l'autre des deux côtés d'un plan de symétrie (17-17), le plan de symétrie (17-17) passant par l'axe (1') du tuyau et par le centre de l'étrier (6) du collier, et l'angle d'étalement ($2\gamma$), qui s'étend de l'axe (1') du tube en tant que sommet et passe par les lignes bissectrices (18) des deux surfaces d'appui, se situe dans la gamme $30° < 2\gamma < 100°$, pour un arc de cercle un peu plus grand pour le siège (13) d'appui de la conduite tubulaire et pour la surface circonférentielle extérieure (15) du tube (1) s'y appuyant.

**4.** Dispositif de retenue suivant une des revendications 1 à 3, caractérisé par deux surfaces d'appui, qui sont chacune disposées dans une zone extérieure du siège (13) d'appui de la conduite tubulaire, l'angle d'étalement ($2\gamma$) des surfaces d'appui étant égal à au moins $60°$.

**5.** Dispositif de retenue suivant une des revendications 1 à 4, caractérisé par le fait qu'une surface d'appui s'étend sur un arc de cercle partiel, qui est compris entre un dixième et un cinquième de l'arc de cercle du siège (13) d'appui de la conduite tubulaire.

**6.** Dispositif de retenue suivant une des revendications 1 à 5, caractérisé par le fait qu'au moins une surface d'appui fait partie d'un appui (16), qui est disposé entre l'étrier (6) du collier et le tuyau (1).

7. Dispositif de retenue suivant l'une des revendications 1 à 6, caractérisé par le fait que l'appui (16) est réalisé sous la forme d'une tôle d'insertion, qui s'applique, par une branche coudée (16a), contre la face frontale de l'étrier (16) du collier.

8. Dispositif de retenue suivant l'une des revendications 1 à 7, caractérisé par le fait que pour le blocage en position, selon une liaison par formes complémentaires, l'appui (16) s'engage par une branche (16a) dans un évidement frontal marginal (19) de l'étrier (6) du collier.

9. Dispositif de retenue selon l'une des revendications 1 à 8, caractérisé par le fait que les extrémités de la boucle (8) du collier sont reliées à des tiges filetées (20), les tiges filetées (20) s'engagent dans des fentes ménagées dans des branches (6a, 6b) de l'étrier (6) du collier et des écrous de serrage (9), au moyen desquels la boucle (8) du collier est précontrainte, peuvent être vissés sur les extrémités des tiges, qui dépassent la face inférieure des branches de l'étrier.

10. Dispositif de retenue suivant l'une des revendications 1 à 9, caractérisé par le fait que des vis de serrage (9) sont prévues comme moyens pour régler la force de précontrainte du collier de retenue du tuyau et les vis de serrage (9) sont munies de ressorts de pression (25), notamment de ressorts Belleville.

11. Dispositif de retenue suivant l'une des revendications 1 à 10, notamment pour une conduite tubulaire qui véhicule un fluide à basse température, caractérisé par le fait que la boucle (8) du collier est en un acier plat cintré, en une tresse plate formée de fils, en un empilage lamellaire plat de tôles, en une matière plastique renforcée par des fibres et/ou en une matière plastique renforcée par des fibres de carbone, et/ou est réalisé sous la forme d'une bande lamellaire flexible à couches multiples (84) constituée d'une multiplicité de lamelles en matière plastique renforcée par des fibres et/ou sous la forme d'un cordage (85) tressé plat mou à la torsion, dans lequel les différents brins (33) de cordage possèdent un armaturage de fibres (31) et une gaine en matière plastique (34).

12. Dispositif de retenue suivant l'une des revendications 1 à 11, caractérisé par le fait que les tiges de serrage par vissage (20), formées par le même matériau que la boucle (8) du collier, sont reliées respectivement d'un seul tenant aux extrémités de la bande (8) de collier.

FIG 1

FIG 2

11

FIG 3

FIG 4

FIG 5

FIG 6

FIG 7